# EUROPEAN PATENT APPLICATION

(11) **EP 2 962 908 A1**
(43) Date of publication of application: **06.01.2016**
(21) Application number: 15173977.8
(22) Date of filing: 26.06.2015
(51) Int. Cl.: B60R 25/10, B60R 25/102, B60R 25/104, B60R 25/33

(54) **ALARM DEVICE FOR PROTECTING AGAINST THE THEFT OF FUEL AND BATTERIES IN LORRIES**

(30) Priority: 02.07.2014 ES 201400544 U
(71) Applicant: Salinas Marcos, Adolfo, 18014 Granada (ES)
(72) Inventor: Salinas Marcos, Adolfo, 18014 Granada (ES)
(74) Representative: Bartrina Diaz, José María

(57) **Abstract**

A safety/anti-theft alarm device designed to be installed in lorries, that emits a sound when either the fuel tank or batteries of the vehicle are handled with the intention of being stolen, such that the manipulation or theft of the aforementioned elements can be prevented by activating an alarm, which comprises a connection box in a hidden and central part of the vehicle, specifically the beams, inside of which are all the electrical connections and cabling which goes through the corrugated tube to the batteries of the lorry, the different sensors, and an (optional) connection for connecting a tracking device that allows fleets to be managed and notifications to be received over the phone, among other things. The system will be installed using fixing elements such as flanges or clasps.

## Description

### AREA OF THE TECHNOLOGY

The area of the technology, as per the statement section of this descriptive report, is included in the scope of the alarm systems area and, specifically, alarms for detecting the manipulation and theft of fuel tanks and batteries from lorries, mainly through the use of sound alerts.

### OBJECT OF THE INVENTION

This descriptive report of the proposed invention refers to a safety/anti-theft alarm device especially designed to be installed in lorries, particularly for protecting objects which are most vulnerable to theft, such as the fuel tank and batteries. The object of the invention is to provide an alarm device that emits a sound when either the fuel tank or batteries of the vehicle are handled with the intention of being stolen, such that the manipulation or theft of the aforementioned elements can be prevented by activating an alarm. In addition, the alarm device can send a message or signal remotely to an external receptor device.

### BACKGROUND TO THE INVENTION

First of all it should be stated that the applicant is not aware of any invention that currently exists or that has previously existed which uses the same technology and especially the same method of installation, type of sensors, and structural elements as used in this descriptive report; and which furthermore are applied in the area of alarms used in lorries, in terms of protecting the aforementioned elements that are the fuel tank and battery.

In practice, there are few alarm devices which are designed to provide an alert when the batteries or fuel tank of a lorry are being stolen. There are various systems or alarm devices which prevent or provide an audible or light-based alert when the vehicle in general is being stolen; not when a specific part of the vehicle is being stolen. This invention pushes forward the current state of the art, providing an alarm which is especially designed to protect against the theft of fuel and batteries from lorries, which can be activated and deactivated with a remote control, equipped with sensors which use two unique types of technology and which will be used in turn according to the nature of the lorry in which the device is installed. These two types are a piezoelectric impact sensor with quartz crystal technology, and other electromagnetic microwave sensors with wave frequency changes based on the DOPPLER effect.

The alarm is installed on the outer part of the protected elements of the lorry in a tightly sealed manner, thereby protecting it from any exposure to water from changes in the weather, as well as avoiding dust and other small particles from causing a failure or deterioration of the components used. The anti-theft alarm device also has the option to send a notification to a receptor.

### BRIEF DESCRIPTION OF FIGURES

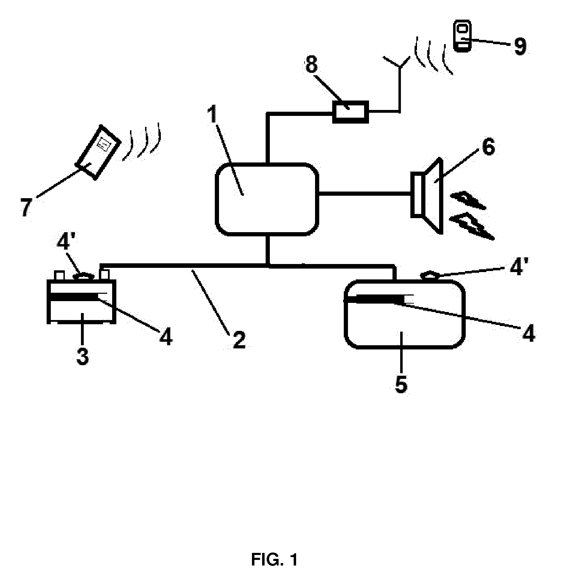

Figure 1.- Figure 1 shows a block diagram of the installation of the anti-theft alarm safety device for lorries made in line with the object of this invention.

### DESCRIPTION OF THE PREFERRED MODE OF INSTALLATION

From the figures presented, it can be observed that this invention starts with an electrical device consisting of a central connection box (1) which is hidden in the central part of the vehicle, preferably in the beams themselves. All the necessary cables will run from said electrical connection box (1) to the different connections and electrical devices. The cables will be protected with a corrugated tube (2) leading to the different connections including the power supply from the batteries (3), the sensors (4), and an (optional) connection (9) for connecting a tracking device for managing fleets and sending telephone signals, among other things. The electrical installation will preferably be made by following the path of the vehicle's other cables, so that it is not obvious that the device is an alarm, as well as to preserve order by having all the cables run along the same path. For the installation, conventional fixing or attachment elements such as flanges or clasps will be used. The power source for the different devices used as well as for the system as a whole will be the batteries (3) of the vehicle. Therefore, since the battery is an essential element in the operation of the invention for the reasons outlined above, and given its potential resale value, it is vulnerable to being removed, damaged, or manipulated, and so it also requires protection. This is done by attaching sensors (4) on the battery which are out of reach and out of sight. The type of technology used will depend on the type of lorry; as such, for lorries with a canvas or which are not refrigerated, the sensor (4') will be a piezoelectric or impact sensor which is sensitive to all kinds of vibration. In refrigerated lorries, the chassis of the lorry is exposed to vibrations from the independent refrigeration motors, and this would cause the piezoelectric sensors to send false alarms. Therefore, for this type of vehicle, the sensors (4) will use high frequencies or electromagnetism based on DOPPLER technology. These sensors detect presence; that is, approaching the object which is being protected. The other object or element of the lorry which also requires protection and can be the subject of theft is the fuel tank (5). In order to avoid that the tank as a whole or the fuel inside the tank is extracted, impact-detecting sensors (4) are installed using highly-adhesive glue, preferably on the back of the tank (5). These sensors can be protected by placing them inside a small box made from PVC or a similar strong material, in which case they will be hidden from sight and protected from unfavourable weather or any other factor which could dirty them or damage them. The high frequency sensors (4) can be installed in the upper part of the tank (5) or any other part which is considered most suitable, making sure that any approach up to a certain distance from the fuel tank (5), the cap area, flowmeter, or batteries (3) by any alien or unwanted presence will be detected by the sensors. The signals of the different sensors resulting from impacts of lesser or greater intensity or handling of the described elements (batteries and fuel tank of the lorry, as well as the cover and flowmeter of the latter), or an approach being detected will transfer a signal through the cables that will activate a piezoelectric or similar siren (6) that is designed to be installed behind the cabin of the lorry and out of sight. A remote control (7) device can be used by the user to active or deactivate the alarm. The proposed device has a cable carrying a negative signal when the alarm is armed or active that can be connected to an external tracking device (8) in order to manage fleets of lorries and send signals to mobile phones or other similar devices (9) of the owner or person responsible for the vehicle, as well as to the security entities of the State, if applicable.

This descriptive report is considered sufficient so that any expert in the matter might understand the scope of the invention and the advantages which could be derived from its use. The sizes, shapes, mechanisms, and materials which are used in the invention can be of different kinds according to the advantages which they can bring to the specific application as long as they do not affect the essence of the invention. The terms which have been used in this report should not be considered exhaustive.

## Claims

1. Alarm device for protecting against the theft of fuel and batteries from lorries **characterised by** comprising a connection box (1) in a hidden and central part of the vehicle, specifically the beams, inside of which are all the electrical connections and cabling which goes through the corrugated tube (2) to the batteries (3) of the lorry, the different sensors (4), and an (optional) connection for connecting a tracking device (8) that allows fleets to be managed and notifications to be received over the phone, among other things. The system will be installed using fixing elements such as flanges or clasps.

2. Alarm device for protecting against the theft of fuel and batteries from lorries characterised according to claim 1 for using so-called impact or piezoelectric sensors (4) in the alarm device, which are sensitive to all kinds of vibration.

3. Alarm device for protecting against the theft of fuel and batteries from lorries Characterised according to claim 1 for using the so-called high frequency or electromagnetic sensors (4) in the alarm device, based on DOPPLER technology.

4. Alarm device for protecting against the theft of fuel and batteries from lorries characterised according to claim 1 for including a remote control device (7) which can active and deactivate the alarm.

5. Alarm device for protecting against the theft of fuel and batteries from lorries characterised according to claim 1 for having a cable with a negative signal when the alarm is armed or active; connected to an element (8) that sends theft alerts to an external tracker.

6. Alarm device for protecting against the theft of fuel and batteries from lorries characterised according to claim 1 for using the batteries (3) of the vehicle itself as the power source for the different devices and for the system as a whole.
